# DEMANDE DE BREVET EUROPEEN

(11) **EP 1 925 500 A1**
(43) Date de publication de la demande: **28.05.2008**
(21) Numéro de dépôt: 07291381.7
(22) Date de dépôt: 20.11.2007
(51) Int. Cl.: B60R 5/04

(54) **Dispositif de montage d'un cache bagages de véhicule automobile comprenant un couvercle monté mobile**

(30) Priorité: 22.11.2006 FR 0610249
(71) Demandeur: Centre d'Etude et de Recherche pour l'Automobile (CERA), 51100 Reims (FR)
(72) Inventeur: Bayle, André-Xavier, 51100 Reims (FR); Guenamant, Nicolas, 51100 Reims (FR)
(74) Mandataire: Sayettat, Julien Christian

(57) **Abrégé**

L'invention concerne un dispositif (1) de montage d'un cache bagages (2) de véhicule automobile, ledit cache bagages comprenant un carter (3) de logement d'un rideau enroulable et un organe de rigidification du bord arrière dudit rideau, ledit dispositif comprenant un logement (4) de réception d'une partie extrême (5) dudit carter, ledit logement étant pourvu d'un couvercle (6) monté mobile entre une configuration de recouvrement dudit logement et une configuration de libération de l'accès audit logement, afin d'y loger ladite partie extrême. L'invention concerne également un ensemble de montage d'un cache bagages de véhicule automobile comprenant un tel dispositif.

## Description

L'invention concerne un dispositif de montage d'un cache bagages de véhicule automobile et un ensemble de montage d'un cache bagages de véhicule automobile comprenant un tel dispositif.

Il est connu de réaliser un dispositif de montage d'un cache bagages de véhicule automobile, ledit cache bagages comprenant un carter de logement d'un rideau enroulable et un organe de rigidification du bord arrière dudit rideau, ledit dispositif comprenant un logement de réception d'une partie extrême dudit carter.

Un tel dispositif est généralement intégré à chaque ébénisterie latérale de compartiment à bagages.

Lors du retrait du cache bagages du véhicule, les logements sont apparents, ce qui nuit à l'esthétique du véhicule.

L'invention a pour but de pallier cet inconvénient.

A cet effet, et selon un premier aspect, l'invention concerne un dispositif de montage d'un cache bagages de véhicule automobile, ledit cache bagages comprenant un carter de logement d'un rideau enroulable et un organe de rigidification du bord arrière dudit rideau, ledit dispositif comprenant un logement de réception d'une partie extrême dudit carter, ledit logement étant pourvu d'un couvercle monté mobile entre une configuration de recouvrement dudit logement et une configuration de libération de l'accès audit logement, afin d'y loger ladite partie extrême.

Dans cette description, les termes de positionnement dans l'espace (transversal, longitudinal,...) sont pris en référence au dispositif disposé dans le véhicule.

Le dispositif tel que proposé permet donc d'assurer un masquage du logement quand le cache bagages est retiré du véhicule.

Selon un deuxième aspect, l'invention propose un ensemble de montage d'un cache bagages de véhicule automobile, ledit ensemble comprenant deux ébénisteries latérales de compartiment à bagages, chacune desdites ébénisteries comprenant au moins un tel dispositif.

D'autres particularités et avantages de l'invention apparaîtront dans la description qui suit, faite en référence aux figures jointes dans lesquelles :

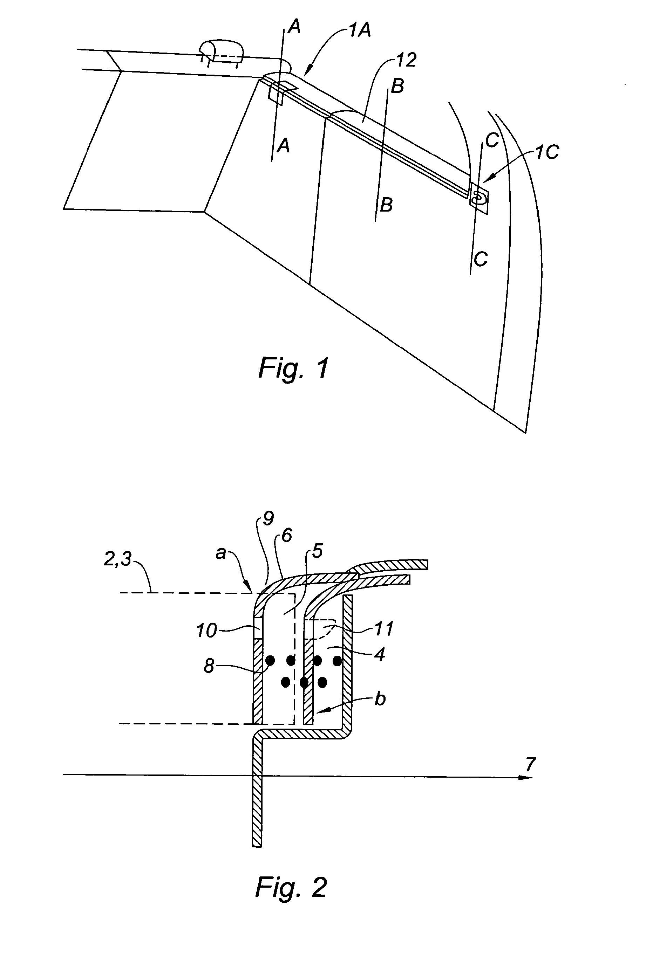

- la figure 1 est une vue schématique en perspective d'une ébénisterie latérale de compartiment à bagages pourvue de deux dispositifs,
- la figure 2 est une vue schématique en coupe d'un dispositif selon un mode de réalisation, le couvercle étant représenté en configuration de recouvrement (a) et de libération (b).

En référence aux figures, on décrit un dispositif 1 de montage d'un cache bagages 2 de véhicule automobile, ledit cache bagages comprenant un carter 3 de logement d'un rideau enroulable et un organe de rigidification du bord arrière dudit rideau, le rideau et l'organe n'étant pas représentés, ledit dispositif comprenant un logement 4 de réception d'une partie extrême 5 dudit carter, ledit logement étant pourvu d'un couvercle 6 monté mobile entre une configuration de recouvrement dudit logement et une configuration de libération de l'accès audit logement, afin d'y loger ladite partie extrême.

Selon la réalisation représentée, le couvercle 6 est monté mobile en translation selon un axe transversal 7.

En variante non représentée, le couvercle 6 est monté mobile en rotation.

Selon la réalisation représentée, le dispositif 1 comprend en outre un moyen ressort 8 agencé pour disposer le couvercle en configuration de recouvrement lorsque le cache bagages 2 n'est pas monté.

Selon la réalisation représentée, le couvercle 6 comprend une zone 9 de coopération avec la partie extrême 5 du carter 3 lors du montage du cache bagages 2, ladite zone étant agencée de sorte à permettre le mouvement du couvercle 6 vers sa configuration de libération par appui de ladite partie extrême sur ladite zone, sans actionnement dudit couvercle par l'utilisateur. En particulier, la zone 9 se présente sous la forme d'un pan incurvé formant coulisseau lorsque la partie extrême 5 est disposée en appui dessus.

Selon la réalisation représentée, le couvercle 6 comprend un moyen de réception 10, ici sous forme de trou, d'un organe de verrouillage 11 du cache bagages une fois monté, ledit organe étant ici sous forme de doigt escamotable.

Selon une réalisation non représentée, le couvercle 6 comprend un moyen d'accrochage d'une extrémité de l'organe de rigidification lorsque le rideau est déroulé. Une telle réalisation peut trouver son intérêt lorsque plusieurs dispositifs 1a,1b sont prévus longitudinalement, notamment pour permettre un montage du cache bagages 2 selon une position avant et une position arrière, par exemple lorsque le véhicule prévoit la possibilité de disposer une troisième rangée de sièges amovibles, la position arrière dudit cache bagages correspondant à la zone d'accrochage dudit organe de rigidification lorsque le rideau est déroulé alors que ledit cache bagages est en position avant.

Un ensemble de montage d'un cache bagages 2 de véhicule automobile peut comprendre deux ébénisteries 12 latérales de compartiment à bagages, chacune desdites ébénisteries comprenant au moins un dispositif 1.

## Revendications

1. Dispositif (1) de montage d'un cache bagages (2) de véhicule automobile, ledit cache bagages comprenant un carter (3) de logement d'un rideau enroulable et un organe de rigidification du bord arrière dudit rideau, ledit dispositif comprenant un logement (4) de réception d'une partie extrême (5) dudit carter, ledit logement étant **caractérisé en ce qu'**il est pourvu d'un couvercle (6) monté mobile entre une configuration de recouvrement dudit logement et une configuration de libération de l'accès audit logement, afin d'y loger ladite partie extrême.

2. Dispositif selon la revendication 1, le couvercle (6) étant monté mobile en translation selon un axe transversal (7).

3. Dispositif selon la revendication 1, le couvercle (6) étant monté mobile en rotation.

4. Dispositif selon l'une quelconque des revendications 1 à 3, comprenant en outre un moyen ressort (8) agencé pour disposer le couvercle (6) en configuration de recouvrement lorsque le cache bagages (2) n'est pas monté.

5. Dispositif selon l'une quelconque des revendications 1 à 4, le couvercle (6) comprenant une zone (9) de coopération avec la partie extrême (5) du carter (3) lors du montage du cache bagages (2), ladite zone étant agencée de sorte à permettre le mouvement dudit couvercle vers sa configuration de libération par appui de ladite partie extrême sur ladite zone.

6. Dispositif selon l'une quelconque des revendications 1 à 5, le couvercle (6) comprenant un moyen de réception (10) d'un organe de verrouillage (11) du cache bagages (2) une fois monté.

7. Dispositif selon l'une quelconque des revendications 1 à 6, le couvercle (6) comprenant un moyen d'accrochage d'une extrémité de l'organe de rigidification lorsque le rideau est déroulé.

8. Ensemble de montage d'un cache bagages (2) de véhicule automobile, ledit ensemble comprenant deux ébénisteries (12) latérales de compartiment à bagages, chacune desdites ébénisteries comprenant au moins un dispositif selon l'une quelconque des revendications 1 à 7.
